# EUROPÄISCHE PATENTSCHRIFT

(11) **EP 0 529 480 B1**
(45) Veröffentlichungstag und Bekanntmachung des Hinweises auf die Patenterteilung: **28.02.1996**
(21) Anmeldenummer: 92114070.3
(22) Anmeldetag: 18.08.1992
(51) Int. Cl.: B23Q 7/14, B23Q 1/00, B23Q 1/26

(54) **Palettenträger für Werkzeugmaschinen**
Pallet support for a machine-tool
Support de pallettes pour un machine-outil

(30) Priorität: 23.08.1991 DE 9110427 U
(43) Veröffentlichungstag der Anmeldung: 03.03.1993
(73) Patentinhaber: DECKEL MAHO GmbH, D-87459 Pfronten (DE)
(72) Erfinder: Babel, Werner, W-8962 Pfronten (DE); Haas, Peter, W-8959 Rieden (DE)
(74) Vertreter: Patentanwälte Beetz - Timpe - Siegfried Schmitt-Fumian - Mayr

(56) Entgegenhaltungen:
- DE-A- 3 232 367
- DE-A- 3 702 865

## Beschreibung

Die Erfindung betrifft ein verfahren zur Montage einer Palette auf einem Patettenträger einer Werkzeugmaschine gemäß dem Oberbegriff des Patentanspruchs 1 sowie eine Vorrichtung zur Durchführung des Verfahrens.

Palettenträger sind in verschiedenen Ausführungen bekannt und werden in programmgesteuerten Fräs- und Bohrmaschinen sowie in Bearbeitungszentren eingesetzt, um die aur Paletten aufgespannten Werkstücke schnell und betriebssicher wechseln zu können. Eine wesentliche Voraussetzung für die wiederholte Durchführung gleicher Bearbeitungsvorgänge an den eingewechselten Werkstücken ist die automatische und hochgenaue Positionierung der eingewechselten Paletten auf dem Palettenträger sowie ihre feste Fixierung in den jeweils vorgegebenen Arbeitsstellungen. Bei bekannten Palettenträgern besteht das Problem, daß die Paletten am Ende ihrer Übertragungsbewegung auf den Führungsschienen direkt aufliegen und beim Einschieben der Zentrierbolzen noch geringe seitliche Justierbewegungen im Übergangsbereich zwischen Haftreibung und Gleitreibung ausführen müssen, bevor die hydraulischen Klemmelemente voll wirksame werden. Hierdurch wird die Genauigkeit der Palettenpositionierung auf dem Palettenträger beeinträchtigt.

Ferner hat sich gezeigt, daß die Betriebsfähigkeit von vollautomatischen Werkzeugmaschinen entscheidend durch Ablagerungen von Feststoffpartikeln, feinen Spänen u.dgl. auf den Gleitflächen der verschiedenen Führungsschienen herabgesetzt wird. Diese Ablagerungen werden beim Überfahren dieser Gleitflächen durch z.B. eine Palette in die häufig verwendeten duktilen Gleitbeläge hineingedrückt und führen zu Beschädigungen der feinbearbeiteten Gleitflächen.

Aus der DE-A-37 02 865 ist eine gattungsgemäße Vorrichtung zur selbsttätigen Montage einer Werkstück-Palette auf dem Palettenträger einer Werkzeugmaschine bekannt, die einen dem Palettenträger vorgeordneten Übergabeschlitten mit einem Verschiebeantrieb für die Palette aufweist. Zum Spannen der auf den Palettenträger aufgeschobenen Palette sind im zentralen Teil des Palettenträgers federbelastete Flachkolben vorgesehen, die seitlich angeformte Nasen in Seitenkerben von Betätigungsbolzen aufweisen. Die Betätigungsbolzen sind in den Führungsschienen quer geführt und weisen seitliche Ausschnitte zur Aufnahme von seitlich an den Paletten ausgebildeten Spannleisten auf. Die Kolben werden durch Federkraft in ihrer Spannstellung gehalten und mittels Druckluft gelöst, die über im Palettenträger verlaufende Kanäle zugeführt wird. Über Zweigkanäle im Palettenträger wird die Druckluft zu federbelasteten Sperrventilen geführt, die in den Führungsschienen angeordnet sind und durch Überschieben der Palette geöffnet werden. Die Druckluftzufuhr zum Palettenträger erfolgt über Schnellverschlüsse, die an den Mündungsenden von im Übergabeschlitten verlaufenden Druckluftkanälen angeordnet sind und eine Strömungsverbindung zu den Kanälen im Palettenträger herstellen, sobald der Übergabeschlitten den Palettenträger kontaktiert.

Aufgabe der Erfindung ist es, bei programmesteuerten Werkzeugmaschinen eine Positionierung der jeweiligen Paletten in den vorgegebenen Stellungen mit höherer Genauigkeit sowie gleichzeitig eine wirksame Reinigung der kritischen Bauteile bei jedem Paletten-Wechselvorgang zu ermöglichen.

Diese Aufgabe wird erfindungsgemäß durch die im Patentanspruch 1 angegebenen Maßnahmen sowie durch die Merkmale des Patentanspruchs 3 gelöst.

Erfindungsgemäß wird bei jedem Wechselvorgang, d.h. beim Aufschieben oder Aufsetzen einer Palette auf die Führungsschienen des Palettenträgers eine Spülflüssigkeit unter hohem Druck von ca. 40 bar in die Druckflüssigkeitskanäle des Palettenträgers eingeleitet. Diese Druckflüssigkeit spritzt auf die sich vorschiebenden Führungsflächen der jeweiligen Palette und fließt mit hohem Druck seitlich durch den zwischen den beiden Führungsflächen des Palettenträgers und der Palette gebildeten Spalt. Aufgrund der hohen kinetischen Energie dieses Flüssigkeitsstroms werden Schmutzpartikel von der einen oder anderen Gleitfläche abgelöst und mitgerissen. Darüber hinaus bildet diese Druckflüssigkeit bei Betätigung der Klemmelemente, d.h. während des Spannvorganges der Palette auf dem Palettenträger, ein praktisch reibungsfreies Gleitpolster von hohem hydraulischem Druck, das die bei der Justierung der Palette erforderlichen kleinen Seitenbewegungen wegen der fehlenden Reibung begünstigt. Demzufolge werden durch die Erfindung die Vorteile erzielt, daß einerseits die Gleitflächen der Führungsschienen von Ablagerungen wirksam gereinigt werden und daß eine genauere Positionierung der Palette erreicht wird.

Um eine automatische Beaufschlagung der im Palettenträger vorgesehenen Leitungen mit der Druckflüssigkeit zu erzielen, sind gemäß der Erfindung die an der vorderen Stirnseite des Palettenträgers vorgesehenen Schnellverbinder hohlzylindrisch ausgebildet und nach außen durch eine Blende abgedeckt. An der zugeordneten Stirnseite eines Paletten-Übergabe-Schlittens sind Anschlußstutzen vorgesehen, die über entsprechende Druckleitungen mit einer Spülflüssigkeitspumpe in Verbindung stehen. Bei einer Vorschiebebewegung des Schlittens gelangen diese Anschlußstutzen automatisch mit den hohlzylindrisch ausgebildeten Schnellverbindern im Palettenträger in flüssigkeitsdichten Eingriff. Dabei wird die Druckflüssigkeitszufuhr zu diesen Anschlußstutzen so gesteuert, daß bereits vor der Herstellung der Kupplungsverbindung ein Flüssigkeitsstrahl aus diesen Anschlußstutzen austritt, um die Außenseite der Schnellverbinder von Ansätzen zu reinigen.

Weitere Besonderheiten und Vorzüge der Erfindung sind bei dem im folgenden anhand der Zeichnung im einzelnen beschriebenen Ausführungsbeispiel verwirklicht. Es zeigen:
- Fig. 1:: eine Paletten-Übergabestation mit dem Werkstücktisch einer Fräsmaschine in perspektivischer Darstellung;
- Fig. 2:: vergrößert den Palettenträger mit aufgeschobener Palette in perspektivischer Darstellung;
- Fig. 3a, b:: zwei Phasen zum Aufschieben einer Palette auf einen Palettenträger.

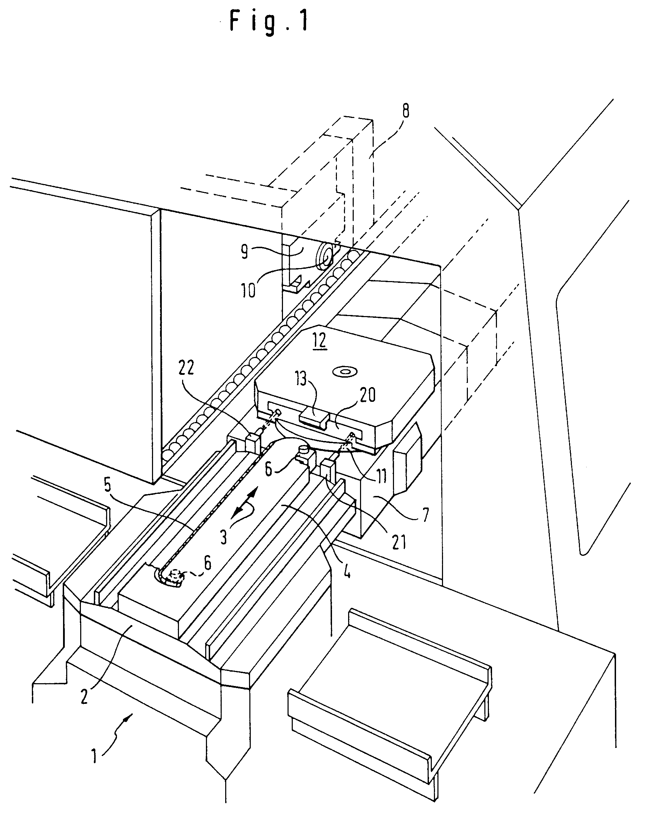

Die in Fig. 1 dargestellte Übergabevorrichtung enthält auf einem Traggestell 1 einen Schlitten 2, der auf dem Gesteil 1 in Richtung des Doppelpfeiles 3 verfahrbar angeordnet ist und auf dem Gestell 1 um eine - nicht dargestellte - Vertikalachse verdreht werden kann. An einem Mittelsteg 4 des Schlittens 3 ist eine Kette 5 montiert, an der ein Mitnehmer 6 mit einem vorstehenden Zapfen befestigt ist.

Durch einen nicht dargestellten Antriebsmotor kann der Mitnehmer aus einer hinteren - gestrichelt dargestellten - Stellung in die vordere Endstellung gemäß Fig. 1 zusammen mit der Kette 5 verfahren.

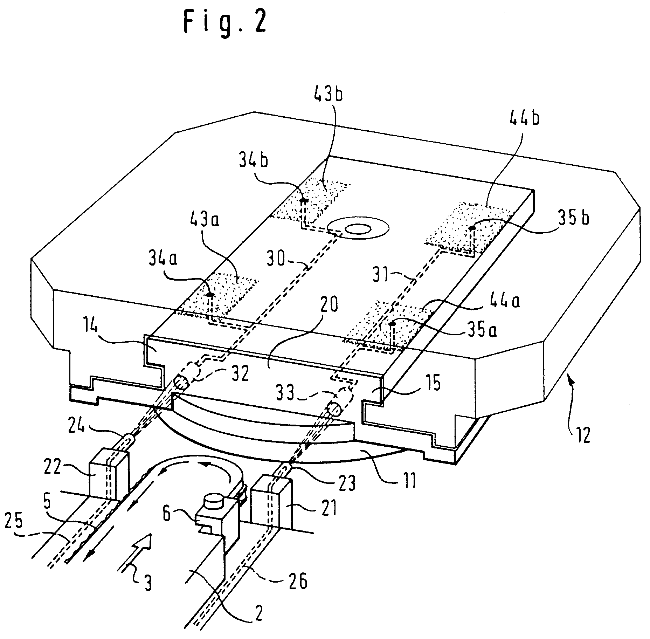

Auf einem NC-Tisch 7 des nur teilweise dargestellten Bearbeitungszentrums mit einem Doppelständer 8 und einer in einem horizontalen Spindelstock 9 gelagerten Arbeitsspindel 10 ist über einen Rundtisch 11 eine Palette 12 aufgespannt, die eine viereckige Form mit abgefasten Ecken besitzt und an ihrer einen Stirnseite einen hakenförmigen Mitnehmer 13 aufweist. Diese Palette 12 ist auf einem Palettenträger 20 montiert, der ggfs. verdrehbar auf der Oberfläche des NC-Tisches 7 angeordnet ist. Wie insbesondere aus Fig. 2 ersichtlich, meist der Palettenträger 20 zwei Führungsschienen 14, 15 auf, deren feinbearbeitete Oberflächen je eine Gleitfläche für die entsprechend bearbeiteten Gegenflächen an der aufzuschiebenden Palette 12 bilden. An der Stirnseite des Schlittens sind zwei Pfosten 21, 22 montiert, die je einen Anschlußstutzen 23, 24 an ihrer Vorderseite tragen. Ferner sind im Schlitten 2 zwei Druckflüssigkeitsleitungen 25, 26 ausgebildet, die in den Anschlußstutzen 23, 24 ausmünden und mit einer nicht dargestellten Hochdruckpumpe zur Erzeugung eines Flüssigkeitsdrucks von mindestens 40 bar verbunden sind. In diesen Hochdruckleitungen 25, 26 befinden sich nicht dargestellte Sperrventile, die über die Steuerung geöffnet und geschlossen werden können.

In dem plattenförmigen Palettenträger sind Druckflüssigkeitskanäle 30, 31 ausgebildet, die in durch Blenden verschlossene Schnellverbinder 32, 33 ausmünden und zu düsenartigen Spritzöffnungen 34a, 34b und 35a, 35b führen. Die Schnellverbinder 32, 33 sind an der vorderen Stirnfläche des Palettenträgers so angeordnet, daß bei einer Vorschubbewegung des Schlittens 2 dessen Anschlußstutzen 23, 24 mit diesen Schnellverbindern in flüssigkeitsdichtem Eingriff gelangen. Bei der in Fig. 2 dargestellten Stellung des Schlittens 2, in welcher die Anschlußstutzen 23, 24 noch nicht mit den Schnellverbindern 32, 33 in Eingriff stehen, wird durch Öffnen der - nicht dargestellten - Sperrventile Druckflüssigkeit in scharfen Strahlen gegen die durch Blenden nach außen abgedeckten Schnellverbinder 32, 33 gespritzt, um deren Stirnflächen von Ablagerungen zu säubern.

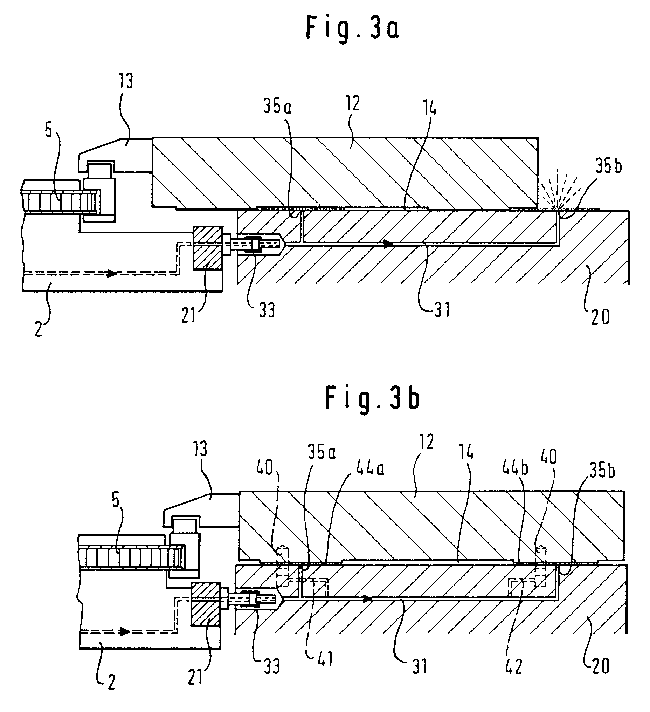

Wie aus einer Betrachtung der Figuren 2, 3a und 3b hervorgeht, wird durch den Eingriff der beiden Anschlußstutzen 23, 24 in die Schnellverbinder am Palettenträger 20 eine Strömungsverbindung der Druckflüssigkeitskanäle 30, 31 im Palettenträger mit den Hochdruckleitungen 25, 26 im Schlitten 2 hergestellt. In diesem - in Fig. 3 dargestellten - Moment beginnt die Druckflüssigkeitszufuhr zu den Spritzdüsen 34, 35, wobei die Druckflüssigkeit aus der - noch nicht von der Palette 12 überdeckten - Düse 35b in den von der Schutzkabine der Werkzeugmaschine umgebenen Arbeitsraum ausspritzt. Zwischen der Oberfläche der Führungsschiene 14, 15 und der Unterseite der Palette 12 entsteht an der Ausmündung der von der Palette bereits überdeckten Düse 35a in dem Zwischenspalt eine intensive seitliche Strömung, die alle eventuell an der einen oder anderen Fläche vorhandenen Anlagerungen von Spänen oder anderen Partikeln mit hoher kinetischer Energie abspült. In der in Fig. 3b dargestellten Endphase befindet sich die Palette 12 in ihrer vorgegebenen Arbeitsposition, wobei Klemmbolzen 40 in entsprechende Ausnehmungen an der Unterseite der Palette eingreifen und die Palette 12 mit hoher Preßkraft gegen die Oberfläche der Führungsschienen ziehen. Zu diesen Klemmbolzen führen Zweigkanäle 41, 42 von jedem der Hochdruckkanäle 30, 31. Sobald die Palette die in Fig. 3b dargestellte Endposition erreicht, werden - nicht dargestellte - Justierzapfen oder andere genaue Anschlagmittel zur Wirkung gebracht. Gleichzeitig bilden sich an den Düsen 34, 35 Druckpolster 43, 44a, 44b, auf denen die Palette 12 quasi schwimmt, so daß geringfügige seitliche Justierbewegungen der Palette 12 praktisch reibungslos ablaufen. Erst durch Anziehen der Klemmbolzen 40 wird in der Endphase die gesamte Flüssigkeit aus den spaltförmigen Druckpolstern herausgedrückt, so daß eine satte und großflächige Auflage der Palette 12 auf den vorbestimmten Flächen der Führungsschienen erfolgt.

Die Erfindung ist nicht auf das vorstehend beschriebene Ausführungsbeispiel beschränkt. Vielmehr können auch andersartige Palettenträger mit den Druckflüssigkeitskanälen versehen werden, beispielsweise Palettenträger, auf welche die Paletten von oben durch eine Absenkbewegung aufgesetzt werden. In diesem Fall sind naturgemäß die Schnellverbinder in den Paletten für den Anschluß der Druckflüssigkeit in anderer geeigneter Weise ausgebildet.

## Patentansprüche

1. Verfahren zur Montage einer Palette auf einem Palettenträger einer Werkzeugmaschine, bei dem
- die Palette (12) von einem vor dem Werkstücktisch (7)
- und auf dem Traggestell (1) der Werkzeugmaschine verfahrbar angeordneten Übergabeschlitten (2) motorisch auf Führungsschienen (14, 15) des Palettenträgers (20) aufgeschoben wird,
- die aufgeschobene Palette (12) in einer vorbestimmten Position auf dem Palettenträger (20) durch Zentrier- und Klemmglieder (40) fixiert wird,
- die Klemmglieder (40) durch ein Druckmittel betätigt werden, das über selbsttätig kuppelbare Kanäle (25, 26 und 30, 31) im Übergabe-Schlitten (2) und im Palettenträger (20) den Klemmgliedern (40) zugeführt wird und das als Gleitmittel zwischen die Gleitflächen der Führungsschienen (14, 15) und der Palette (12) geleitet wird,
**dadurch gekennzeichnet,** daß
als Druckmittel eine Hochdruck-Spülflüssigkeit mit einem Druck von mindestens 40 bar verwendet wird, und
diese Hochdruck-Spülflüssigkeit Anschlußstutzen (23, 24) des Schlittens (2) bereits vor der Herstellung der druckdichten Kupplungsverbindung zwischen den Kanälen (25, 26) im Übergabe-Schlitten (2) und den Kanälen (30, 31) im Palettenträger (20) zugeführt und auf am Palettenträger (2) vorgesehenen Schnellverbinder (32, 33) gespritzt wird.

2. Verfahren nach Anspruch 1,
dadurch gekennzeichnet,
daß die Hochdruckflüssigkeit während des Aufschiebevorganges der Palette (12) auf den Palettenträger (7) kontinuierlich aus Düsen (34, 35) in den Führungsschienen (14, 15) ausgespritzt wird und mit der Gleitfläche der überschobenen Palette Druckpolster mit Reinigungswirkung bildet.

3. Vorrichtung zur Durchführung des Verfahrens nach Anspruch 1 oder 2, bestehend aus
- einem Übergabeschlitten (2), der einen Schiebe-Antrieb (3, 6) für eine Palette (12) sowie zu frontseitigen Anschlußstutzen (22, 23) führende Druckmittelkanäle (25, 26) aufweist, und
- einem auf einem Werkstücktisch (11) montierten Palettenträger (20), der profilierte Führungsschienen (14, 15) sowie Zentrierglieder und durch Druckmittel betätigte Klemm- und Spannglieder (40) aufweist und in dem Druckmittelkanäle (30, 31) ausgebildet sind, die von frontseitigen Einlaßöffnungen zu den Klemm- und Spanngliedern (40) und zu in den Gleitflächen der Führungsschienen (14, 15) angeordneten Auslaßöffnungen (34, 35) führen,
**dadurch gekennzeichnet,** daß
- das Druckmittel eine Hochdruck-Spülflüssigkeit mit einem Druck von mindestens 40 bar ist,
- die Schnellverschlüsse (32, 33) zur abgedichteten Aufnahme der Anschlußstutzen (23, 24) hohlzylindrisch ausgebildet sind und
- den Druckmittelkanälen (25, 26) im Übergabeschlitten (2) Steuerelemente zugeordnet sind, die die Spülflüssigkeits-Zufuhr zu den Anschlußstutzen (23, 24) vor Herstellen der Kupplungsverbindung mit den Schnellverschlüssen (32, 33) freigeben.

4. Vorrichtung nach Anspruch 3,
dadurch gekennzeichnet,
daß in den Führungsschienen (14, 15) ausgebildete ständig offene Spritzdüsen (34, 35) mit den Druckmittelkanälen (31, 32) verbunden sind.

## Claims

1. A method of mounting a pallet on a machine tool pallet carrier, wherein
- the pallet (12) is pushed by motor on to guide rails (14, 15) of the pallet carrier (20) from a transfer slide (2) disposed in front of the workpiece table (7) and traversable on the machine tool support frame (1),
- after being pushed on to the pallet carrier (20) the pallet (12) is fixed in a predetermined position thereon by centring and clamping elements (40),
- the clamping elements (40) are actuated by a pressure medium supplied via ducts (25, 26 and 30, 31) which are adapted to be coupled automatically in the transfer slide (2) and in the pallet carrier (20), said pressure medium being conveyed as a lubricant between the sliding surfaces of the guide rails (14, 15) and the pallet (12),
characterised in that
the pressure medium used is a high-pressure washing liquid having a pressure of at least 40 bar, and
this high-pressure washing liquid is supplied to connecting spigots (23, 24) of the slide (2) before the pressure-tight coupling is established between the ducts (25, 26) in the transfer slide (2) and the ducts (30, 31) in the pallet carrier (20) and is sprayed on to quick-action connectors (32, 33) provided on the pallet carrier (2).

2. A method according to claim 1, characterised in that while the pallet (12) is being pushed on to the pallet carrier (7) the high-pressure liquid is sprayed continuously from nozzles (34, 35) in the guide rails (14, 15) and together with the sliding surface of the pushed-on pallet forms a pressure cushion with a cleaning action.

3. Apparatus for performing the method according to claim 1 or 2, consisting of
- a transfer slide (2) having a sliding drive (3, 6) for a pallet (12) and pressure medium ducts (25, 26) leading to connecting spigots (22, 23) at the front, and of
- a pallet carrier (20) which is mounted on a workpiece table (11) and which comprises profiled guide rails (14, 15) and centring elements and pressure-medium-actuated clamping and tensioning elements (40), pressure medium ducts (30, 31) being formed in the pallet carrier and leading from front inlet apertures to the clamping and tensioning elements (40) and to exit apertures (34, 35) disposed in the sliding surfaces of the guide rails (14, 15),
characterised in that
- the pressure medium is a high-pressure washing liquid having a pressure of at least 40 bar,
- the quick-action fasteners (32, 33) for sealed accommodation of the connecting spigots (23, 24) are of hollow cylindrical construction and
- the pressure medium ducts (25, 26) in the transfer slide (2) are associated with control elements which release the washing liquid supply to the connecting spigots (23, 24) before the coupling is established with the quick-action fasteners (32, 33).

4. Apparatus according to claim 3, characterised in that continuously open spray nozzles (34, 35) in the guide rails (14, 15) are connected to the pressure medium ducts (31, 32)

## Revendications

1. Procédé pour le montage d'une palette sur un porte-palette d'une machine-outil, procédé suivant lequel:
- la palette (12) est engagée par coulissement motorisé sur des rails de guidage (14, 15) du porte-palette (20) par un chariot de transfert (2), qui est disposé devant la table porte-pièce (7) et qui est mobile sur le cadre porteur (1) de la machine-outil,
- la palette (12) ainsi engagée est fixée, au moyen d'éléments de centrage et de serrage (40), dans une position déterminée d'avance sur le porte-palette (20),
- les éléments de serrage (40) sont actionnés par un fluide de pression, qui est amené à travers des canaux (25, 26 et 30, 31) raccordables automatiquement, aménagés dans le chariot de transfert (2) et dans le porte-palette (20), vers les éléments de serrage (40), et qui est conduit comme lubrifiant entre les surfaces de frottement des rails de guidage (14, 15) et de la palette (12),
caractérisé en ce qu'un fluide de lavage sous pression élevée, qui se trouve sous une pression d'au moins 40 bar, est employé comme fluide de pression et en ce que ce fluide de lavage sous pression élevée est amené aux manchons de raccordement (23, 24) du chariot (2) dès avant l'établissement d'une interconnexion de jonction étanche entre les canaux (25, 26) dans le chariot de transfert (2) et les canaux (30, 31) dans le porte-palette (20) et est projeté sur des raccords rapides (32, 33) prévus sur le porte-palette (2).

2. Procédé suivant revendication 1, caractérisé en ce que pendant l'opération d'engagement de la palette (12) sur le porte-palette (7), le fluide de lavage sous pression élevée est éjecté de façon continue à partir de buses (34, 35) dans les rails de guidage (14, 15) et qu'il forme avec la surface de glissement de la palette engagée un matelas sous pression avec action de rinçage.

3. Dispositif pour l'exécution du procédé suivant la revendication 1 ou 2, se composant:
- d'un chariot de transfert (2) qui est pourvu d'un entraînement de translation (3, 6) pour une palette (12) et des canaux à fluide de pression (25, 26) conduisant à des manchons de raccordement frontaux (22, 23), ainsi que
- d'un porte-palette (20), qui est monté sur une table porte-pièce (11), qui est équipé de rails de guidage profilés (14, 15) ainsi que d'éléments de centrage et d'éléments de serrage et de tension (40) actionnés par fluide de pression et dans lequel sont façonnés des canaux à fluide de pression (30, 31) qui conduisent à partir d'ouvertures d'entrée frontales vers les éléments de serrage et de tension (40) et vers des orifices de sortie (34, 35) aménagés dans les surfaces de glissement des rails de guidage (14, 15),
caractérisé en ce que :
- le fluide de pression est un fluide de lavage sous pression élevée se trouvant sous une pression d'au moins 40 bar,
- les raccords rapides (32, 33) sont façonnés en cylindres creux pour recevoir de manière étanche les manchons de raccordement (23, 24), et
- les canaux à fluide de pression (25, 26) dans le chariot de transfert (2) sont pourvus de moyens de commande qui libèrent l'amenée de fluide de lavage vers les manchons de raccordement (23, 24) dès avant l'établissement de l'interconnexion de jonction avec les raccords rapides (32, 33).

4. Dispositif suivant la revendication 3, caractérisé en ce que des gicleurs de pulvérisation (34, 35) ouverts en permanence, qui sont façonnés dans les rails de guidage (14, 15), sont en communication avec les canaux à fluide de pression (31, 32).
